(19) 

Europäisches
Patentamt

European
Patent Office

Office européen
des brevets

(11) **EP 4 393 888 A1**

(12) **EUROPEAN PATENT APPLICATION**

(43) Date of publication:
**03.07.2024  Bulletin 2024/27**

(21) Application number: **22217258.7**

(22) Date of filing: **30.12.2022**

(51) International Patent Classification (IPC):
**C02F 1/461** *(2023.01)*    **C02F 1/66** *(2023.01)*
**C02F 101/36** *(2006.01)*

(52) Cooperative Patent Classification (CPC):
**C02F 1/461; C02F 1/66;** C02F 2001/46147;
C02F 2101/36; C02F 2201/4618

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Evonik Operations GmbH
45128 Essen (DE)**

(72) Inventors:
• CHANG, Xiaojun
  **Amherst, NY 14228 (US)**
• AN, Weidong
  **Williamsville, NY 14221US (US)**

(74) Representative: **Evonik Patent Association
c/o Evonik Industries AG
IP Management
Bau 1042A/PB 15
Paul-Baumann-Straße 1
45772 Marl (DE)**

(54) **DEGRADATION OF PER- AND POLYFLUOROALKYL SUBSTANCES**

(57)    The present invention relates to organic carboxylate used as supporting electrolyte in an electrochemical cell to decompose and defluorinate one or more per- and polyfluoroalkyl substances. Organic carboxylate not only greatly accelerated PFASs decomposition, but also enhanced their defluorination.

**EP 4 393 888 A1**

**Description**

The present invention relates to organic carboxylate used as supporting electrolyte in an electrochemical cell to decompose and defluorinate one or more per- and polyfluoroalkyl substances. Organic carboxylate not only greatly accelerated PFASs decomposition, but also enhanced their defluorination. Using organic carboxylates also eliminates the formation of toxic compounds, e.g. perchlorates, due to the oxidation of supporting electrolyte during electrolysis perchlorates.

**BACKGROUND**

Per- and polyfluoroalkyl substances (PFASs) are chemically and thermally stable owing to the extremely strong and stable C-F bonds in these molecules. They have been extensively used in various industrial and commercial applications as surfactants, catalysts, packaging materials, firefighting agents, and intermediates of fluoropolymers. Unfortunately, many studies have revealed that exposure to PFASs may lead to adverse health effects. Although they have been largely phased out during the last decade, PFASs' resistance to typical environmental degradation processes results in their environmental persistence and bioaccumulation.

PFASs have been detected in various environmental matrices, including rivers, sediments, groundwater, and even in biotic samples, which impose great risk to the environment and human health. In 2017, US EPA set the health advisory level for perfluorooctanoic acid (PFOA) and perfluorooctanesulfonate (PFOS) - the two most produced PFAS compounds - in drinking water at 0.07 $\mu$g/L, both individually and combined.

Because of their great thermal, oxidative, and reductive resistance, it is challenging to remove PFASs using most conventional water treatment technologies. Electrochemical oxidation with strong oxidation performance and mild operation conditions has become a promising treatment technology for PFASs.

Absorption and membrane filtration technologies have been applied to remove PFASs. Instead of destroying the compounds, these processes only generate concentrated PFAS waste and transfer them to different environmental matrices. On the other hand, some destructive PFAS treatment technologies, including incineration, sonolysis, and photolysis, have limitations such as high energy consumption, low efficiency, and harsh treatment conditions. Electrochemical oxidation provides an option for PFAS treatment with high energy efficiency and operational simplicity.

However, prior arts using electrolysis could not simultaneously achieve both fast and effective decomposition and defluorination of PFASs. Those prior arts have relied on traditional inorganic salts, such as sodium sulfate, sodium perchlorate and sodium chloride, as the supporting electrolytes in the electrochemical treatment of PFASs. For instance, WO 2020/041712 A1 describes sodium sulfate as an electrolyte for the oxidation of PFOS and PFOA in an electrochemical cell. However, when sodium chloride is applied, the formation of perchlorate and other chlorinated byproducts, which has an adverse health impact, has been reported in previous studies (Wang, Lu, Li, Wang, & Huang, 2020).

Thus, new supporting electrolytes should be developed that are able to provide a fast and effective decomposition and defluorination of polyfluoroalkyl substances.

The present invention relates to the unexpected findings of organic carboxylates comprised electrolyte in electrolysis that have achieved fast and effective PFASs decomposition and defluorination under mild conditions. Using carboxylates also eliminates the formation of toxic compounds from the supporting electrolyte oxidation during electrolysis.

**SUMMARY**

The present invention relates to an aqueous feed solution for the electrochemical degradation of per- and polyfluoroalkyl substances, comprising an organic carboxylate, and one or more per- and/or polyfluoroalkyl substances

Moreover, a method for the electrochemical oxidation of per- and/or polyfluoroalkyl compounds is provided, comprising a) providing an aqueous feed solution according to the invention, and b) electrochemical oxidizing the one or more per- and/or polyfluoroalkyl compounds in the feed solution.

Furthermore, an electrochemical cell is provided that comprises the inventive aqueous feed solution. The inventive method can also utilize the inventive electrochemical cell.

Thus, the organic carboxylate or the aqueous feed solution comprising the organic carboxylate is used for the electrochemical oxidation of one or more per- and polyfluoroalkyl compounds.

**DESCRIPTION OF THE INVENTION**

The present invention relates to an aqueous feed solution for the electrochemical degradation of per- and polyfluoroalkyl substances, comprising an organic carboxylate, and one or more per- and/or polyfluoroalkyl substances.

It must be noted that, as used in the specification and the appended claims, the singular forms "a," "an" and "the" include plural unless the context clearly dictates otherwise. Moreover, for example, reference to "organic carboxylate" includes mixtures of two or more such organic carboxylates and also only one kind of organic carboxylate such as a sodium citrate. Accordingly, the expression "organic carboxylate" means at least one organic carboxylate or least one organic carboxylate substance. Alternatively, the plural form of organic carboxylate can be used.

The expression "comprising" used herein means that further components can be present. However, comprising can be in each case independently restricted with the expression "consisting of".

The organic carboxylate according to the present invention is used as supporting electrolyte for the electrochemical degradation of per- and polyfluoroalkyl substances. In other words, a feed solution comprises a supporting electrolyte comprising an organic carboxylate.

The expression "aqueous" with respect to the feed solution means that the feed solution predominantly comprises of water. Particularly, more than 50 wt.-% (or vol.-%) of the solvents comprises water. Accordingly, it is possible that further solvents are present. For instance, the aqueous feed solution comprises at least 55 wt.-% water based on the total weight of the solvents of the aqueous feed solution, preferably at least 80 wt.-% water, more preferably at least 90 wt.-% water, even more preferably at least 95 wt.-% water, most preferably at least 99 wt.-% water. However, it is preferred that only water is used as the solvent in the feed solution.

The per- and polyfluoroalkyl substances (PFAS) can include (among others) perfluorooctane sulfonic acid (PFOS), perfluorooctanoic acid (PFOA), perfluorobutane sulfonate (PFBS), perfluorobutanoic acid (PFBA) or combinations thereof.

Any organic carboxylate can be used according to the present invention. The organic carboxylate (organic carboxylate supporting electrolyte) is a salt of an organic carboxylic acid. Preferably the organic carboxylate is soluble in the used solvent. The metal ion of the salt is not limited according to the present invention. The metal ion of the salt can be preferably an alkali metal ion or an earth alkaline metal. Alkali metals are lithium (Li), sodium (Na), potassium (K), rubidium (Rb), cesium (Cs), and francium (Fr). Earth alkaline metal are beryllium (Be), magnesium (Mg), calcium (Ca), strontium (Sr), barium (Ba), and radium (Ra). $Na^+$ is particularly preferred as metal ion of the organic carboxylate. The ion can also be an ammonium ion, such as ammonium acetate.

The organic carboxylate comprises at least one carboxyl functional group. This means that each compound or molecule of the organic carboxylate(s) comprises the number of carboxylic functional groups as mentioned herein. An example of an organic carboxylate comprising one carboxyl functional group is acetic acid (or acetate ion, or a salt of acetic acid as mentioned above). The organic carboxylate generally comprises one to four carboxyl functional groups. An example of an organic carboxylate comprising three carboxyl functional group is citric acid (or citrate ion, or a salt of citric acid as mentioned above).

Preferably the organic carboxylate comprises at least two carboxyl functional groups, more preferably the organic carboxylate comprises at least three carboxyl functional groups, and most preferably the organic carboxylate comprises three carboxyl functional groups.

Preferably the organic carboxylate comprises two to four carboxyl functional groups, more preferably the organic carboxylate comprises three to four carboxyl functional groups, and most preferably the organic carboxylate comprises three carboxyl functional groups.

The organic carboxylate can have 1 to 15 carbon atoms, preferably 2 to 15 carbon atoms, more preferably 3 to 10 carbon atoms and most preferably 3 to 8 carbon atoms.

The organic carboxylate can be an aliphatic carboxylate, preferably a C1 to C10 aliphatic carboxylate, preferably C2 to C8 aliphatic carboxylate. Aliphatic carboxylates include branched aliphatic compounds.

Examples of an organic carboxylate is a salt of formic acid, acetic acid, propionic acid, butyric acid, succinic acid, pyruvic acid, malic acid, itaconic acid, gluconic acid, oxalic acid, tartaric acid, lactic acid, and citric acid. They can be used separately or in combination.

Preferably, an organic carboxylate is selected from the salts of acetic acid, oxalic acid, tartaric acid, lactic acid, citric acid and mixtures thereof, preferably the organic carboxylate is selected from the salts of acetic acid, oxalic acid, tartaric acid, citric acid and mixtures thereof. More preferably, the organic carboxylate is selected from the salts of acetic acid, oxalic acid, tartaric acid, citric acid and mixtures thereof, preferably the organic carboxylate is selected from the salts of acetic acid, oxalic acid, tartaric acid, citric acid and mixtures thereof. Most preferably the organic carboxylate is the salt of citric acid, such as trisodium citrate.

The organic carboxylate can comprise the salt of citric acid, preferably sodium citrate, and more preferably trisodium citrate. Alternatively, mono- and/or disodium citrate can be used.

The organic carboxylates should be free of fluorine substituents and/or chlorine substituents.

The per- and polyfluoroalkyl substances and the organic carboxylate(s) are different compounds.

It is possible that "further supporting electrolytes", i.e., supporting electrolytes other than organic carboxylates, are present. However, it is preferred that supporting electrolytes consists of organic carboxylates. Further supporting electrolytes can be inorganic supporting electrolytes. Particularly, further supporting electrolytes can include sodium sulfate, sodium persulfate, sodium hydroxide, sodium nitrate, sodium chloride, sodium perchlorate or combinations thereof.

Preferably no sulfates, perchlorates or chlorides should be used as the supporting electrolytes or should be present in the feed solution.

The ionic strength of the organic carboxylate (in the aqueous feed solution) can be between 1 to 6000 mmol/L aqueous feed solution, preferably 1 to 3000 mmol/L aqueous feed solution, more preferably 2 to 1200 mmol/L aqueous feed solution, even more preferably 3 to 900 mmol/L aqueous feed solution, and most preferably 4 to 720 mmol/L aqueous feed solution. The expression "mol/L aqueous feed solution" means that x mol per L of the aqueous feed solution are present.

The ionic strength, I, of the organic carboxylate is a function of the concentration of all ions present in that solution and calculated by the following equation,

$$I = \frac{1}{2} \sum_{i=1}^{n} c_i z_i^2$$

(I)

where one half is because both cations and anions are included; $c_i$ is the molar concentration of ion i (M, mol/L), $z_i$ is the charge number of that ion, and the sum is taken over all ions in the solution.

The feed solution can comprise 0.1 to 100 ppm of the one or more per- and/or polyfluoroalkyl compounds, preferably 0.5 to 50 ppm, more preferably 1 to 30 ppm, more preferably 1 to 20 ppm, most preferably 1 to 10 ppm.

The feed solution after the electrochemical oxidation can comprise less than 0.5 ppm of the one or more per- and/or polyfluoroalkyl compounds, preferably less than 0.2 ppm, more preferably less than 0.1 ppm, even more preferably less than 0.01 ppm, and most preferably less than 0.001 ppm.

The aqueous feed solution should be substantially free of sulfates, preferably the aqueous feed solution comprises less than 50 ppm of sulfates, more preferably less than 5 ppm of sulfates, the sulfate can be sodium sulfate.

The aqueous feed solution should be substantially free of chlorides, preferably the aqueous feed solution comprises less than 50 ppm of chlorides, more preferably less than 5 ppm of chlorides, the chlorides can be sodium chloride.

The aqueous feed solution should be substantially free of perchlorates, preferably the aqueous feed solution comprises less than 50 ppm of perchlorates, more preferably less than 5 ppm of perchlorates, the perchlorates can be sodium perchlorate.

The expression "less than" includes that no sulfate is present or was added.

Furthermore, the invention relates to a method for the electrochemical oxidation of per- and/or polyfluoroalkyl compounds, comprising providing an aqueous feed solution according to the invention, electrochemical oxidizing the one or more per- and/or polyfluoroalkyl compounds in the feed solution.

The electrochemical oxidation of per- and/or polyfluoroalkyl compounds results in the decomposition and/or defluorination of the per- and/or polyfluoroalkyl compounds.

The method can comprise further steps such as obtaining the electrochemical oxidized feed solution. Moreover, this invention can be used more practically in conjunction with other water treatment approaches that can pre-concentrate PFASs, such as ion exchange, reverse osmosis, or nanofiltration.

The electrochemical oxidation is generally done in an electrochemical cell. Examples of electrochemical cells can be found in WO 2020/247029 A1 under the item "Electrochemical". The electrochemical cell generally includes two electrodes, i.e., a cathode and an anode. A reference electrode may also be used, for example, in proximity to the anode.

The electrochemical oxidation can be carried out in batches or continuously, i.e., a flow design. Various reactor flow designs may be implemented. Selection may be based on various operational parameters, for example, based on a concentration of the PFAS in water to be treated. A flow between electrode (FBE) configuration may be used. Alternatively, a flow through electrode (FTE) configuration may be used. A FBE configuration may be appropriate for relatively high concentrations of PFAS while a FTE configuration may be used for relatively low concentrations of PFAS, such as for drinking water treatment.

The anode of the electrochemical cell can comprise a boron doped diamond (BDD) electrode such as a doped diamond on niobium substrate (BDD/Nb) (anode), platinum-plated titanium, lead alloys, or a Magnéli phase titanium oxide electrode, in particular a $Ti_nO_{2n-1}$ (n = 4-10) electrode. An exemplary electrode is $Ti_4O_7$. US 2019 /0185351 A1 specifically relates to Magnéli phase titanium oxide electrodes in paragraphs 56 ff. and to electrochemical cells in general.

An electrode (cathode) of the electrochemical cell can be made of a stainless steel, nickel alloy, titanium, or a DSA material. DSA materials may be uncoated or may be coated with noble metals or metal oxides, such as Pt or IrOz, among others. The area of both electrodes can be between 1 to 300 cm². 

The overall cell voltage should be sufficient in terms of anode potential in order to oxidize PFASs. High efficiency while maintaining a high oxidation rate may be achieved by implementing a high surface area anode. A high porosity anode, e.g., a foam anode, may beneficially provide high surface area to introduce high current for PFAS destruction.

The current density at which the method of the invention is carried out can be chosen as desired and is not particularly limited. For instance, the current density can be derived from the examples. The current density (anode) can be 1 to 2000 mA/cm$^2$, preferably 30 to 1000 mA/cm$^2$, more preferably 50 to 500 mA/cm$^2$, and most preferably 100 to 200 mA/cm$^2$. The current density could be determined from the current and the area of the electrode (anode).

The electrolysis can be b) carried out at a temperature in the range of 1 to 60 °C, preferably 10 to 50 °C, more preferably 15 to 40 °C, and most preferably 20 to 35 °C. The higher temperatures generally lead to faster and possibly more complete decomposition or defluorination of the PFASs. The heat supplied to and/or evolved in the method can be utilized by means of at least one heat exchanger, for example for preheating the wastewater/rinsing water to be treated.

The electrolysis (electrochemical oxidation of the PFASs) b) should be carried out for 1 to 480 min, preferably 5 to 240 min, more preferably 15 to 120 min, and most preferably 30 to 100 min. The respective time depends on the concentration of the PFAS, the desired decomposition or defluorination as well as the organic carboxylate used in the feed solution.

The method can further comprise, c) obtaining an aqueous solution after the electrolysis b), wherein said aqueous solution obtained after the electrolysis b) comprises less than 0.5 ppm of the one or more per- and/or polyfluoroalkyl compounds, preferably less than 0.2 ppm, more preferably less than 0.1 ppm, even more preferably less than 0.01 ppm, and most preferably less than 0.001 ppm. The concentration of the PFASs can be determined as described below.

The defluorination rate after the electrolysis can be higher than 17%, preferably higher than 40%, more preferably less than 50% ppm, even more preferably higher than 70%, most preferably higher than 90%. The defluorination of the PFASs can be determined as described below.

The organic carboxylate or inventive aqueous feed solution is used for the electrochemical oxidation of one or more per- and polyfluoroalkyl compounds.

In the following, several examples are provided that reveal the beneficial effect of organic carboxylate as supporting electrolytes. The examples are intended to be illustrative in nature and are not to be considered as limiting the scope of the materials, systems, and methods discussed herein.

## Materials and methods

PFOA and PFOS were selected as the model substances in the present invention. PFOA (perfluorooctanoic acid, $C_7F_{15}COOH$, Mw = 414 g/mole, 96%) and PFOS (potassium perfluorooctanesulfonate, $C_8F_{17}SO_3K$, Mw = 538 g/mole, 98%) were purchased from Sigma Aldrich.

Inorganic salts as conventional supporting electrolytes for comparison: Sodium sulfate ($Na_2SO_4$, ACS grade) was purchased from VWR. Sodium persulfate ($Na_2S_2O_8$, > 99%) was manufactured at Evonik Active Oxygen LLC. All solutions were prepared with ultrapure water (resistivity > 18.2 m$\Omega$·cm).

Organic carboxylates of the present invention: Sodium acetate trihydrate ($CH_3COONa·3H_2O$, ACS grade) and sodium citrate dihydrate ($Na_3C_6H_5O_7·2H_2O$, ACS grade) were purchased from VWR. Sodium tartrate dibasic dihydrate ($Na_2C_4H_4O_6·2H_2O$, ≥ 99.0%), sodium DL-lactate ($NaC_3H_5O_3$, w/w 60%), and sodium oxalate ($Na_2C_2O_4$, ACS grade) were purchased from Sigma-Aldrich. Ammonium acetate ($CH_3COONH_4$, ≥ 99.0%) was purchased from Honeywell.

Electrochemical cell: An undivided plate-and-frame electrochemical cell was used in the present invention. The anode was made of BDD coating on niobium substrate. The cathode was made of stainless steel. The areas for both electrodes were at about 30 cm$^2$.

## Electrochemical decomposition of PFOA and PFOS

The feed solution (about 1L) containing 3 to 5 ppm PFOA or PFOS and a supporting electrolyte at an ionic strength of 25.35 mM was first prepared and stored in a glass beaker.

The feed solution was then circulated through the undivided electrochemical cell at a flow rate of about 0.25 L/min. The cell was connected to a DC power supply (Keysight N5700). The electrolysis experiments were conducted in galvanostatic mode at a current load of 4 amps. The temperature of the feed solution was controlled around 25-33 °C during the whole time of the experiment. The current density used in the examples was 133.33 mA/cm$^2$.

The treated solution was sampled from the beaker at different time intervals for further analysis of PFOA or PFOS and fluoride in order to quantify both degradation and defluorination of initial PFOA or PFOS in the feed solution.

## Analytical Procedures

PFOA or PFOS: An Agilent 1260 HPLC system coupled with an Agilent 6125C single quadrupole MSD was employed for PFAS analysis. A Phenomenex Luna® Omega 3.0 μm PC C18 LC 100 Å column (100 ×2.1 mm) was used in the present study with a Phenomenex SecurityGuard TM ULTRA Cartridge.

The temperature in the column compartment and the mobile flow rate were set at 50 °C and 0.25 ml/min, respectively. The mobile phases consisted of 2 mM ammonium acetate (MP A) in methanol and 2 mM ammonium acetate in DI water (MP B). The analysis gradient started with a 24-min ramp from 35% to 90% MP A, followed by a 12-min hold at 90% MP A and then a 12-min washing with 100% MP A, and finalized by an 8-min equilibrating period with the starting condition (35% MP A and 65% MP B). The parameters for the MS were: nitrogen nebulizer gas temperature 350 °C, nebulizer gas pressure 20 psi, nitrogen drying gas flow 13 ml/min, and capillary voltage 3500 V. The total ion chromatogram was obtained to monitor the overall ion count while selected ion monitoring (SIM) was used measuring ions/fragments of interest.

The percentage of decomposition is calculated as

$$R_{PFAS} = \frac{(c_{PFAS,0} - c_{PFAS,t})}{c_{PFAS,0}} \times 100\% \tag{2}$$

where $c_{PFAS,0}$ (ppm) is the initial PFAS concentration and $c_{PFAS,t}$ (ppm) is the PFAS concentration at time t. The calculation is shown using PFAS but any polyfluoroalkyl substances can be used instead such as PFOA or PFOS.

The percentage of defluorination is defined

$$R_{PFAS} = \frac{c_{F^-,t}}{c_{PFAS,0} \times \frac{19 \times n}{Mw_{PFAS}}} \times 100\% \tag{3}$$

where $c_{F^-,t}$ is the concentration of fluoride ion at time t, $M_w$ is the molecular weight of the treated PFAS, $c_{PFAS,0}$ (ppm) is the initial PFAS concentration and n is the number of fluorine atoms contained in the treated PFAS molecule. The calculation is shown using PFAS but any polyfluoroalkyl substances can be used instead such as PFOA or PFOS.

The quantification of fluoride anion (F-) in the samples was performed with ion chromatography following the EPA Method 300.0.

Table 1: Comparative Examples 1 and 2: Electrolysis of PFOA

| Electrolysis Time, minutes | 0 | 7.5 | 15 | 30 | 60 | 120 |
|---|---|---|---|---|---|---|
| Comparative Example 1: Supporting Electrolyte Sodium Sulfate[1] | | | | | | |
| PFOA Decomposition, % | 0 | 16.9 | 33.7 | 56.7 | 88.0 | 99.5 |
| PFOA Defluorination, % | 0 | 6.6 | 12.1 | 22.8 | 40.5 | 50.3 |
| Comparative Example 2: Supporting Electrolyte Sodium Persulfate[2] | | | | | | |
| PFOA Decomposition, % | 0 | 22.1 | 41.5 | 65.8 | 91.5 | 99.9 |
| PFOA Defluorination, % | 0 | 4.7 | 9.5 | 18.6 | 29.6 | 40.2 |
| [1] Electrolysis of PFOA with Supporting Electrolyte Sodium Sulfate ($Na_2SO_4$ at 1.20 g/L, ionic strength 25.35 mM) | | | | | | |
| [2] Electrolysis of PFOA with Supporting Electrolyte Sodium Persulfate ($Na_2S_2O_8$ at 2.01 g/L, ionic strength 25.35 mM) | | | | | | |

Table 2: Comparative Examples 3 and 4: Electrolysis of PFOS

| Electrolysis Time, minutes | 0 | 7.5 | 15 | 30 | 60 | 120 |
|---|---|---|---|---|---|---|
| Comparative Example 3: Supporting Electrolyte Sodium Sulfate[3] | | | | | | |
| PFOS Decomposition, % | 0 | 11.6 | 53.0 | 65.9 | 92.6 | 99.2 |
| PFOS Defluorination, % | 0 | 2.5 | 8.8 | 22.6 | 26.9 | 39.2 |
| Comparative Example 4: Supporting Electrolyte Sodium Persulfate[4] | | | | | | |
| PFOS Decomposition, % | 0 | 0.3 | 64.1 | 82.0 | 98.4 | 99.8 |

(continued)

| Comparative Example 4: Supporting Electrolyte Sodium Persulfate*4 | | | | | | |
|---|---|---|---|---|---|---|
| PFOS Defluorination, % | 0 | 0 | 0 | 9.9 | 15.7 | 20.3 |

*3 Electrolysis of PFOS with Supporting Electrolyte Sodium Sulfate (Na$_2$SO$_4$ at 1.20 g/L, ionic strength 25.35 mM) *4 Electrolysis of PFOS with Supporting Electrolyte Sodium Persulfate (Na$_2$S$_2$O$_8$ at 2.01 g/L, ionic strength 25.35 mM)

Table 3: Examples 5 to 10: Electrolysis of PFOA

| Electrolysis Time, minutes | 0 | 7.5 | 15 | 30 | 60 | 120 |
|---|---|---|---|---|---|---|
| Example 5: Supporting Electrolyte Sodium Acetate*5 | | | | | | |
| PFOA Decomposition, % | 0 | 52.6 | 75.9 | 93.7 | 99.8 | 99.9 |
| PFOA Defluorination, % | 0 | 28.4 | 44.8 | 59.7 | 67.2 | 67.2 |
| Example 6: Supporting Electrolyte Ammonium Acetate*6 | | | | | | |
| PFOA Decomposition, % | 0 | 45.9 | 70.0 | 87.8 | 99.3 | 99.6 |
| PFOA Defluorination, % | 0 | 32.1 | 48.3 | 64.1 | 73.0 | 82.4 |
| Example 7: Supporting Electrolyte Sodium Oxalate*7 | | | | | | |
| PFOA Decomposition, % | 0 | 18.2 | 37.4 | 67.9 | 98.7 | 97.7 |
| PFOA Defluorination, % | 0 | 5.7 | 14.7 | 40.5 | 81.8 | 81.8 |
| Example 8: Supporting Electrolyte Sodium Tartrate*8 | | | | | | |
| PFOA Decomposition, % | 0 | 41.8 | 66.6 | 91.8 | 99.7 | 99.0 |
| PFOA Defluorination, % | 0 | 25.7 | 46.5 | 72.6 | 76.4 | 80.6 |
| Example 9: Supporting Electrolyte Sodium Lactate*9 | | | | | | |
| PFOA Decomposition, % | 0 | 46.7 | 68.9 | 90.8 | 99.3 | 99.6 |
| PFOA Defluorination, % | 0 | 0 | 0 | 0 | 22.5 | 58.2 |
| Example 10: Supporting Electrolyte Sodium Citrate*10 | | | | | | |
| PFOA Decomposition, % | 0 | 48.7 | 74.5 | 95.5 | 99.8 | 99.8 |
| PFOA Defluorination, % | 0 | 29.6 | 49.6 | 68.1 | 76.3 | 90.2 |

*5 Electrolysis of PFOA with Supporting Electrolyte Sodium Acetate (CH3COONa·3H2O at 3.45 g/L, ionic strength 25.35 mM) *6 Electrolysis of PFOA with Supporting Electrolyte Ammonium Acetate (CH3COONH4 at 1.95 g/L, ionic strength 25.35 mM) *7 Electrolysis of PFOA with Supporting Electrolyte Sodium Oxalate (Na2C2O4 at 1.13 g/L, ionic strength 25.35 mM) *8 Electrolysis of PFOA with Supporting Electrolyte Sodium Tartrate (Na2C4H4O6·2H2O at 1.94 g/L, ionic strength 25.35 mM) *9 Electrolysis of PFOA with Supporting Electrolyte Sodium Lactate (NaC3H5O3, w/w 60% at 4.73 g/L, ionic strength 25.35 mM) *10 Electrolysis of PFOA with Supporting Electrolyte Sodium Citrate (Na$_3$C6H5O7·2H2O at 1.24 g/L, ionic strength 25.35 mM)

Table 4: Examples 11 to 14: Electrolysis of PFOS

| Electrolysis Time, minutes | 0 | 7.5 | 15 | 30 | 60 | 120 |
|---|---|---|---|---|---|---|

(continued)

| Example 11: Supporting Electrolyte Sodium Acetate*11 | | | | | | |
|---|---|---|---|---|---|---|
| PFOS Decomposition, % | 0 | 71.3 | 83.2 | 95.5 | 98.1 | 99.4 |
| PFOS Defluorination, % | 0 | 9.7 | 13.6 | 15.5 | 18.2 | 20.4 |
| Example 12: Supporting Electrolyte Sodium Tartrate*12 | | | | | | |
| PFOS Decomposition, % | 0 | 44.0 | 53.8 | 73.2 | 98.2 | 99.6 |
| PFOS Defluorination, % | 0 | 0 | 0 | 8.9 | 22.1 | 22.1 |
| Example 13: Supporting Electrolyte Sodium Lactate*13 | | | | | | |
| PFOS Decomposition, % | 0 | 17.7 | 57.0 | 86.4 | 96.5 | 99.2 |
| PFOS Defluorination, % | 0 | 0 | 0 | 0 | 17.4 | 21.1 |
| Example 14: Supporting Electrolyte Sodium Citrate*14 | | | | | | |
| PFOS Decomposition, % | 0 | 47.7 | 73.1 | 96.7 | 99.9 | 99.7 |
| PFOS Defluorination, % | 0 | 22.9 | 39.3 | 55.6 | 70.7 | 74.8 |

*11 Electrolysis of PFOS with Supporting Electrolyte Sodium Acetate (CH3COONa·3H$_2$O at 3.45 g/L, ionic strength 25.35 mM) *12 Electrolysis of PFOS with Supporting Electrolyte Sodium Tartrate (Na2C4H4O6·2H$_2$O at 1.94 g/L, ionic strength 25.35 mM) *13 Electrolysis of PFOS with Supporting Electrolyte Sodium Lactate (NaC3H5O3, w/w 60% at 4.73 g/L, ionic strength 25.35 mM) *14 Electrolysis of PFOS with Supporting Electrolyte Sodium Citrate (Na3C6H5O7·2H$_2$O at 1.24 g/L, ionic strength 25.35 mM)

As can be seen from the tables above, organic carboxylates can be beneficially used for decomposition and defluorination. It is possible to achieve a complete decomposition of PFASs after 60 min compared to sodium sulfate and sodium persulfate that are the most common supporting electrolytes according to the prior art. Additionally, the defluorination of PFAS could also be significantly improved after 60 and 120 min.

Table 5: Total decomposition/defluorination of PFOA and PFOS after the 60 min

| | Total Decomposition after 60 min, % | Total Defluorination after 60 min, % |
|---|---|---|
| Comparative Examples 1 and 3 (Sodium Sulfate) | 90.3 | 33.7 |
| Comparative Examples 2 and 4 (Sodium Persulfate) | 95.0 | 22.7 |
| Examples 5 and 11 (Sodium Acetate) | 99.0 | 42.7 |
| Examples 8 and 12 (Sodium Tartrate) | 99.0 | 49.3 |
| Examples 9 and 13 (Sodium Lactate) | 97.9 | 20.0 |
| Examples 10 and 14 (Sodium Citrate) | 99.9 | 73.5 |

As can be seen in table 5, the total decomposition after 60 min is higher utilizing organic carboxylates instead of inorganic compounds. At the same time, the defluorination of PFOA and PFOS using organic carboxylates is comparable with respect to the defluorination using sodium sulfate and sodium persulfate. The defluorination can be further improved by using sodium acetate, sodium tartrate and sodium citrate.

Moreover, sodium citrate as a supporting electrolyte reveals outstanding decomposition and defluorination rates even after 30 min of treatment.

Accordingly, the use of organic carboxylates, especially citrate, not only greatly accelerated PFASs decomposition, but also enhanced their defluorination. Additionally, using carboxylates also eliminates the formation of toxic compounds during electrolysis.

**Claims**

1. An aqueous feed solution for the electrochemical degradation of per- and polyfluoroalkyl substances, comprising an organic carboxylate, and one or more per- and/or polyfluoroalkyl substances

2. The aqueous feed solution according to claim 1, wherein the organic carboxylate is selected from the salts of acetic acid, oxalic acid, tartaric acid, lactic acid, citric acid and mixtures thereof, preferably the organic carboxylate is selected from the salts of acetic acid, oxalic acid, tartaric acid, citric acid and mixtures thereof, more preferably the organic carboxylate is selected from the salts of acetic acid, tartaric acid, citric acid and mixture thereof.

3. The aqueous feed solution according to any one of claims 1 or 2, wherein the organic carboxylate comprises the salts of citric acid, preferably sodium citrate, and more preferably trisodium citrate.

4. The aqueous feed solution according to any one of the preceding claims, wherein the organic carboxylate is free of fluorine substituents and/or chlorine substituents.

5. The aqueous feed solution to any one of the preceding claims, wherein the ionic strength of the organic carboxylate is between 1 to 6000 mmol/L aqueous feed solution, preferably 1 to 3000 mmol/L aqueous feed solution, more preferably 2 to 1200 mmol/L aqueous feed solution, even more preferably 3 to 900 mmol/L aqueous feed solution, and most preferably 4 to 720 mmol/L aqueous feed solution.

6. The aqueous feed solution to any one of the preceding claims, wherein the organic carboxylate is an aliphatic carboxylate, preferably a C1 to C10 aliphatic carboxylate, more preferably C2 to C8 aliphatic carboxylate.

7. The aqueous feed solution according to any one of the preceding claims, wherein the feed solution comprises 0.1 to 100 ppm of the one or more per- and/or polyfluoroalkyl compounds, preferably 0.5 to 50 ppm, more preferably 1 to 30 ppm, more preferably 1 to 20 ppm, most preferably 1 to 10 ppm.

8. A method for the electrochemical oxidation of per- and/or polyfluoroalkyl compounds, comprising

   a) providing an aqueous feed solution according to any one of the preceding claims, and
   b) electrochemical oxidizing the one or more per- and/or polyfluoroalkyl compounds in the feed solution.

9. The method according to any one of the preceding claims, wherein the current density 1 to 2000 mA/cm$^2$, preferably 30 to 1000 mA/cm$^2$, more preferably 50 to 500 mA/cm$^2$, and most preferably 100 to 200 mA/cm$^2$.

10. The method according to any one of the preceding claims, wherein the electrolysis b) is carried out at a temperature in the range of 1 to 60 °C, preferably 10 to 50 °C, more preferably 15 to 40 °C, and most preferably 20 to 35 °C.

11. The method according to any one of the preceding claims, wherein the electrolysis b) is carried out for 1 to 480 min, preferably 5 to 240 min, more preferably 15 to 120 min, and most preferably 30 to 100 min.

12. The method according to any one of the preceding claims, wherein the method further comprises, c) obtaining an aqueous solution after the electrolysis b), wherein said aqueous solution obtained after the electrolysis b) comprises less than 0.5 ppm of the one or more per- and/or polyfluoroalkyl compounds, preferably less than 0.2 ppm, more preferably less than 0.1 ppm, even more preferably less than 0.01 ppm, and most preferably less than 0.001 ppm.

13. The method according to any one of the preceding claims, wherein the defluorination rate after the electrolysis is higher than 17%, preferably higher than 40%, more preferably less than 50% ppm, even more preferably higher than 70%, most preferably higher than 90%.

14. An electrochemical cell comprising an aqueous feed solution as defined in claims 1 to 7.

15. Use of an organic carboxylate, preferably as defined according to any one of claims 1 to 7, more preferably the use of the aqueous feed solution according to any one of claims 1 to 13, for the electrochemical oxidation of one or more per- and polyfluoroalkyl compounds.

Europäisches
Patentamt

European
Patent Office

Office européen
des brevets

# EUROPEAN SEARCH REPORT

Application Number

EP 22 21 7258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2020/041712 A1 (EVOQUA WATER TECH LLC [US]) 27 February 2020 (2020-02-27) * page 1, line 15 - page 11, line 10 * ----- | 1-15 | INV. C02F1/461 C02F1/66 |
| A | CN 105 540 759 A (UNIV HUAZHONG) 4 May 2016 (2016-05-04) * the whole document * ----- | 1-15 | ADD. C02F101/36 |
| A | CN 114 715 978 A (UNIV JIANGNAN) 8 July 2022 (2022-07-08) * the whole document * ----- | 1-15 | |

TECHNICAL FIELDS
SEARCHED     (IPC)

C02F

The present search report has been drawn up for all claims

| Place of search | Date of completion of the search | Examiner |
|---|---|---|
| The Hague | 15 May 2023 | Zsigmond, Zoltán |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 21 7258

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2023

| Patent document cited in search report | | Publication date | Patent family member(s) | | Publication date |
|---|---|---|---|---|---|
| WO 2020041712 | A1 | 27-02-2020 | AU | 2019325635 A1 | 11-02-2021 |
| | | | CA | 3107792 A1 | 27-02-2020 |
| | | | EP | 3841069 A1 | 30-06-2021 |
| | | | WO | 2020041712 A1 | 27-02-2020 |
| CN 105540759 | A | 04-05-2016 | NONE | | |
| CN 114715978 | A | 08-07-2022 | NONE | | |

**EP 4 393 888 A1**

**Patent documents cited in the description**

- WO 2020041712 A1
- WO 2020247029 A1
- US 20190185351 A1